# EUROPÄISCHE PATENTSCHRIFT

(11) **EP 3 687 848 B1**
(45) Veröffentlichungstag und Bekanntmachung des Hinweises auf die Patenterteilung: **20.07.2022**
(21) Anmeldenummer: 18779297.3
(22) Anmeldetag: 19.09.2018
(51) Int. Cl.: B60K 35/00, G03B 21/58

(54) **ANZEIGEVORRICHTUNG UMFASSEND EINEN PROJEKTOR AUF DER RÜCKSEITE EINER PROJEKTIONSFLÄCHE**
DISPLAY DEVICE COMPRISING A PROJECTOR ON THE REAR SIDE OF A PROJECTION AREA
DISPOSITIF D'AFFICHAGE COMPRENANT UN PROJECTEUR À L'ARRIÈRE D'UNE SURFACE DE PROJECTION

(30) Priorität: 26.09.2017 DE 102017217023
(43) Veröffentlichungstag der Anmeldung: 05.08.2020
(73) Patentinhaber: Audi AG, 85045 Ingolstadt (DE)
(72) Erfinder: LOTTES, Daniel, 93346 Ihrlerstein (DE)
(86) Internationale Anmeldenummer: PCT/EP2018/075383
(87) Internationale Veröffentlichungsnummer: WO 2019/063388

(56) Entgegenhaltungen:
- EP-A1- 2 520 453
- EP-A2- 1 517 549
- DE-A1-102005 020 260
- DE-T5-112008 002 093
- US-A1- 2002 171 637

## Beschreibung

Die Erfindung betrifft ein Kraftfahrzeug, umfassend wenigstens eine Anzeigeeinrichtung, wobei die Anzeigeeinrichtung einen Projektor und eine transluzente oder transparente Projektionsfläche, auf deren Rückseite der Projektor die von der Vorderseite her erkennbare Informationsdarstellung projiziert, umfasst, wobei die Größe der Projektionsfläche veränderbar ist.

Kraftfahrzeuge umfassen üblicherweise wenigstens eine Anzeigeeinrichtung in Form eines Displays, das auch als Touch-Display ausgeführt sein kann. Dieses Display ist zumeist im Bereich der Mittelkonsole oder im oberen Bereich des Armaturenbretts verbaut, entweder fest oder versenkbar. Diese Anzeigeeinrichtungen respektive Display sind jeweils in einem Gehäuse verbaut oder, bei festem Verbau im Bereich der Mittelkonsole, dortseits in entsprechenden gehäuseartigen Aufnahmen oder ähnlichem integriert.

Die Anzeigeeinrichtungen sind üblicherweise LCD-Displays, an denen auf der definierten Anzeigefläche, die je nach die Darstellung steuernder Steuersoftware auch entsprechend partioniert sein kann, die erforderlichen Informationen wiedergegeben werden.

Ein Beispiel für ein Anzeigesystem für ein Fahrzeug ist aus DE 10 2005 020 260 A1 bekannt. Dieses System umfasst einen hinter einer Windschutzscheibe angeordneten Projektor und mehrere an unterschiedlichen Positionen im Kraftfahrzeug angeordnete Projektionsflächen. Eine dieser Projektionsflächen ist größenveränderlich und halbdurchsichtig und wird rückseitig von dem Projektor beleuchtet.

Eine weitere Vorrichtung zur Darstellung visueller Informationen in einem Kraftfahrzeug ist aus EP 2 520 453 A1 bekannt. Diese umfasst eine Projektionseinheit, mittels der Bilder auf Kunststoffoberflächen im Bereich einer Innenverkleidung rückseitig projiziert werden. Zwischen der Projektionseinheit und der entsprechenden Projektionsfläche können Spiegel und/oder Linsen angeordnet sein.

DE 11 2008 002 093 T5 offenbart ein Anzeigegerät für Fahrzeuge, umfassend einen Bildschirm und eine dahinter angeordnete Projektionseinheit, die sich vor einem Beifahrersitz befindet. Mittels Reflektionskomponenten kann der optische Pfad und somit die Bildgröße verändert werden.

Aus EP 1 517 549 A2 ist ein Videoanzeigesystem für ein Kraftfahrzeug bekannt, umfassend eine Projektionsfläche, auf die rückseitig ein von einem Projektor erzeugtes Bild über einen Spiegel projiziert wird. Der Projektor ist in dem Kraftfahrzeug beweglich angeordnet, so dass mittels einer entsprechenden Bewegung der Abstand zur Projektionsfläche und mithin die Größe des projizierten Bildes variierbar ist.

In Zukunft wird das pilotierte Fahren, bei dem das Fahrzeug weitgehend oder vollständig autonom fährt, zunehmend Raum greifen. Der Fahrer wird dabei entlastet und kann sich anderem widmen. Dabei besteht die Möglichkeit, dass der Fahrer mit seinem Sitz in eine weiter vom Lenkrad respektive dem Armaturenbrett beabstandete Position zurückfährt, in der er angenehmer und mit mehr Raum sitzt, so dass er sich den anderen Tätigkeiten zuwenden kann. Er kann also eine Art Ruheposition einnehmen. Da er in dieser jedoch weiter von der Anzeigeeinrichtung entfernt ist, sind die Darstellungen auf der Anzeigeeinrichtung respektive dem Display für ihn schlechter wahrnehmbar.

Der Erfindung liegt damit das Problem zugrunde, ein dem gegenüber verbessertes Kraftfahrzeug anzugeben.

Erfindungsgemäß ist bei einem Kraftfahrzeug vorgesehen, dass die Anzeigeeinrichtung einen Projektor und eine Projektionsfläche, auf deren Rückseite der Projektor die von der Vorderseite erkennbare Informationsdarstellung projiziert, umfasst, wobei die Größe der Projektionsfläche veränderbar ist, wobei
- der Abstand der Projektionsfläche zum Projektor veränderbar und die Projektionsfläche flexibel und teilweise auf einer oder zwei Rollen oder Walzen auf- und abwickelbar ist oder
- die Projektionsfläche positionsfest verbaut ist und ein oder mehrere sie rückseitig abschnittsweise überdeckende Verkleidungselemente vorgesehen sind, die zum Verändern des Überdeckungsgrads bewegbar sind.

Erfindungsgemäß ist vorgesehen, dass als Anzeigeeinrichtung eine Rückprojektionseinrichtung zum Einsatz kommt. Diese umfasst einen Projektor, der eine Projektionsfläche von der Rückseite her beleuchtet, also die von der Vorderseite her sichtbare Informationsdarstellung auf die Rückseite der Projektionsfläche, die natürlich entsprechend transluzent oder transparent ist, projiziert. Diese Projektionsfläche ist in ihrer Größe nicht starr, sondern erfindungsgemäß in ihrer Größe veränderbar. Dies ermöglicht es, die Bild- oder Informationsdarstellung in ihrer Größe variieren zu können, je nachdem wo sich nun konkret der Fahrer respektive Fahrersitz befindet. Fährt der Fahrer beispielsweise das Auto selbst, befindet er sich also in der üblichen Fahrerposition, so ist die Größe der Projektionsfläche für diesen Fall eingestellt, sie ist derart ausgelegt, dass der Fahrer, der relativ nahe zu ihr sitzt, alle Informationen gut erkennen kann. Befindet sich der Fahrer respektive der Fahrersitz jedoch in der Ruheposition weiter entfernt von der Projektionsfläche, so wird die Größe der Projektionsfläche entsprechend vergrößert, so dass insgesamt die Projektionsdarstellung größer wird und mithin die Informationen in entsprechend guter Weise vom auch weiter entfernt dazu sitzenden Fahrer erkannt werden können.

Gemäß einer ersten Erfindungsalternative ist erfindungsgemäß vorgesehen, dass der Abstand der Projektionsfläche zum Projektor veränderbar ist. Demgemäß wird der axiale Abstand zwischen Projektor und Projektionsfläche zur Größenveränderung variiert. Das heißt, dass die Projektionsfläche näher am Projektor ist, wenn der Fahrer respektive der Fahrersitz bei aktivem Fahren des Kraftfahrzeugs durch den Fahrer näher an der Projektionsfläche sitzt. Demgegenüber wird die Projektionsfläche axial vom Projektor wegbewegt, wenn der Fahrer respektive Fahrersitz in der Ruheposition ist. Aufgrund des Öffnungswinkels des Projektors, der relativ groß zu wählen ist, kann eine entsprechend kurze axiale Bewegung der Projektionsfläche ausreichen, um die Informationsdarstellung entsprechend zu vergrößern.

Bei der Projektionsfläche handelt es sich dabei im Rahmen der ersten Erfindungsalternative erfindungsgemäß um eine flexible Fläche, also eine Art Leinwand, auf die die Informationsdarstellung projiziert wird. Diese flexible Projektionsfläche ist hierbei erfindungsgemäß teilweise auf einer oder zwei Rollen oder Walzen auf- und abwickelbar, um die Größe zu variieren. Die eine oder die beiden Rollen oder Walzen sind entsprechend linear beweglich, so dass sie unter Auf- und Abwickeln der Projektionsfläche entsprechend vom Projektor weg oder zu diesem hinbewegt werden können. Bevorzugt kommen dabei zwei Rollen oder Walzen zum Einsatz, auf denen jeweils die leinwandartige, flexible Projektionsfläche auf- und abwickelbar ist. Diese beiden Rollen oder Walzen sind auf entsprechenden Linearführungen, die schräg zur axialen Bewegungsachse verlaufen, beweglich, so dass sich infolge der Linearbewegung ihr Abstand beim Bewegen vergrößert oder verkleinert. Bei einer Abstandvergrößerung wird die leinwandartige Projektionsfläche zur Vergrößerung derselben von den Rollen abgewickelt, bei einer Verkleinerung des Rollenabstand entsprechend umgekehrt. Ist nur eine Rolle oder Walze vorgesehen, so ist das andere Ende der Projektionsfläche entsprechend positionsfest, jedoch gleichermaßen linear beweglich geführt, um sicherzustellen, dass die Ebene der Projektionsfläche gleich bleibt, mithin also die Projektionsfläche nicht zum Projektor verkippt.

Zweckmäßig ist es dabei, wenn die Projektionsfläche in einer ersten, teilweise aufgewickelten Stellung innerhalb einer gehäuseartigen Einfassung und in einer zweiten, weiter oder vollständig abgewickelten Stellung aus der Einfassung herausbewegt ist. Ist die Projektionsfläche beispielsweise im Bereich der Mittelkonsole verbaut, so kann die Mittelkonsole quasi die gehäuseartige Einfassung darstellen. Die Projektionsfläche respektive Leinwand kann nun axial relativ zu dieser Einfassung, also der Mittelkonsole, bewegt werden und zwischen zwei Positionen verstellt werden, wobei die eine Position quasi innerhalb und die andere Position kurz außerhalb der gehäuseartigen Einfassung respektive Mittelkonsole liegt.

Zur Abstandsvariation ist es zweckmäßig, wenn die eine oder beide Rollen oder Walzen mittels eines motorischen Antriebs bewegbar ist oder sind. Dies ermöglicht eine automatische Verstellung. Diese automatische Verstellung zwischen der kleinen und der großen Projektionsfläche kann beispielsweise an die Position des Fahrersitzes gekoppelt sein, so dass, wenn der Fahrersitz in die Ruheposition verfährt, automatisch auch die Variation der Projektionsfläche erfolgt. Alternativ ist es auch denkbar, dass die Größenveränderung der Projektionsfläche erst nach Betätigung eines entsprechenden Bedienelements, beispielsweise einer Taste oder eines Tastenfelds oder dergleichen ausgelöst wird.

In jedem Fall dient zur Projektionsflächenbewegung wenigstens ein Motor, der die eine oder, wenn beide Rollen gekoppelt sind, beide Rollen aktiv bewegt, wobei hierüber sowohl die Rollen- oder Walzenrotation als auch ihre Axialverschiebung gesteuert werden kann. Alternativ kann auch jede Rolle oder Walze mit einem separaten Motor angetrieben werden, wobei die Motoren natürlich entsprechend synchronisiert sind.

Alternativ zur axialen Bewegung der Projektionsfläche zur Veränderung ihres Abstands zum Projektor ist gemäß einer zweiten Erfindungsalternative erfindungsgemäß vorgesehen, dass die Projektionsfläche positionsfest verbaut ist und ein oder mehrere sie rückseitig abschnittsweise überdeckende Verkleidungselemente vorgesehen sind, die zum Verändern des Überdeckungsgrads bewegbar sind. Bei dieser Erfindungsausgestaltung ist folglich die Projektionsfläche fest verbaut. Der Bereich der Projektionsfläche, der von der Fahrerseite her sichtbar ist, wird über die Stellung entsprechender, die Projektionsfläche randseitig überdeckender Verkleidungselemente, die bewegbar sind, definiert. In einer ausgefahrenen Stellung der Verkleidungselemente ist die Projektionsfläche randseitig entsprechend überdeckt, der sichtbare Teil ist kleiner, verglichen mit der Situation, wenn die Verkleidungselemente eingefahren sind. Hierüber wird also der sichtbare Teil der Projektionsfläche verändert, wobei die Projektionsfläche umso großflächiger sichtbar ist, je weiter der Fahrer respektive Fahrersitz von der Anzeigeeinrichtung entfernt ist. Gleichzeitig erfolgt bei dieser Erfindungsalternative eine Veränderung der Größe der Bildprojektion seitens des Projektors auf die Projektionsfläche, das heißt, dass die Informationsdarstellung projektorseitig zwischen Klein und Groß umschaltbar ist. Sind die Verkleidungselemente ausgefahren, ist also die sichtbare der Projektionsfläche klein, so ist auch die Größe der Informationsdarstellung, wie sie vom Projektor auf die Rückseite der kleinen Projektionsfläche projiziert wird, entsprechend klein. Sind die Verkleidungselemente eingefahren, ist also die sichtbare Projektionsfläche entsprechend groß, wird auch seitens des Projektors umgeschaltet und die Informationsdarstellung größenmäßig entsprechend angepasst, das heißt, dass eine Art Zoom projektorseitig eingestellt wird.

Das oder die Verkleidungselemente können dabei platten- oder jalousieartig ausgeführt und mittels eines motorischen Antriebs bewegbar sein. Die Verkleidungselemente sind beispielsweise nur am oberen und am unteren Rand vorgesehen, sie können also nach oben und unten relativ zur Projektionsfläche bewegt werden. Zum Verstellen ist ein entsprechender Motor vorgesehen, wobei beide Verkleidungselemente auch gekoppelt über den einen Motor bewegt werden können. Denkbar ist es aber auch, zusätzlich seitliche Verkleidungselemente vorzusehen, die also horizontal zur Seite bewegt werden können, um die Projektionsfläche auch in ihrer seitlichen Größe variieren zu können. Hierzu kann ein separater Motor vorgesehen sein, wie auch alle, dann vier, Verkleidungselemente über einen Motor bewegungsgekoppelt bewegt werden können.

Eine zweckmäßige Erfindungsausgestaltung dieser zweiten Variante sieht dabei vor, dass in Abhängigkeit der Veränderung der Größe der Projektionsfläche auch die Größe der vom Projektor projizierten Informationsdarstellung veränderbar ist. Demgemäß schaltet der Projektor nicht nur zwischen einer kleinen und einer großen Informationsdarstellung um, vielmehr ist die tatsächliche Größe der Projektion quasi stufenlos veränderbar, abhängig davon, wie die Größenveränderung der Projektionsfläche erfolgt.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahrzeugs,
- Fig. 2: eine Prinzipdarstellung einer ersten erfindungsgemäßen Ausführungsform mit beweglicher Projektionsfläche in einer ersten Stellung,
- Fig. 3: die Anordnung aus Fig. 2 mit in einer zweiten Stellung befindlichen Projektionsfläche,
- Fig. 4: eine Prinzipdarstellung einer zweiten erfindungsgemäßen Ausführungsform mit fest verbauter Projektionsfläche und zugeordneten Verkleidungselementen in einer ersten Stellung, und
- Fig. 5: die Anordnung aus Fig. 4 mit in einer zweiten Stellung befindlichen Verkleidungselementen.

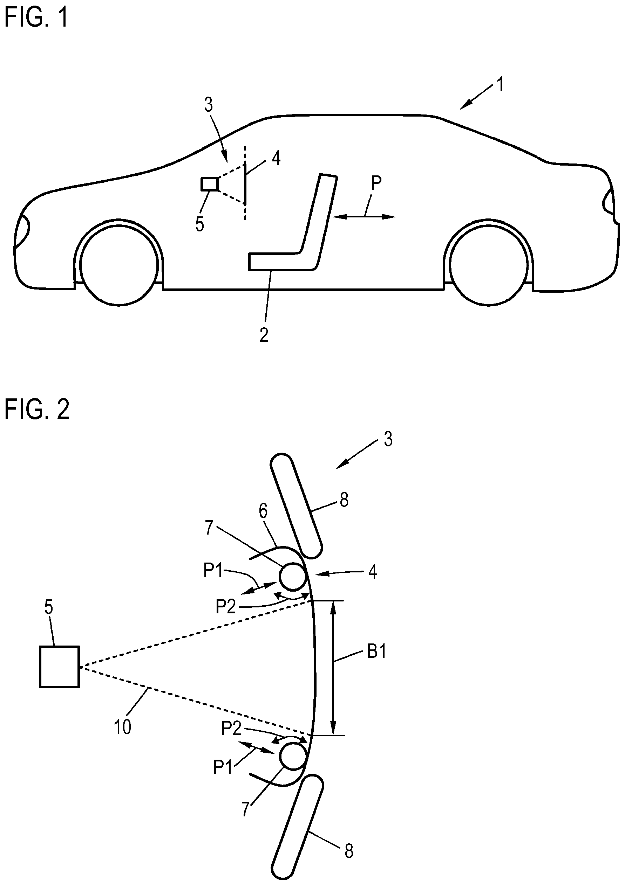

Fig. 1 zeigt ein erfindungsgemäßes Kraftfahrzeug 1 umfassend einen Fahrersitz 2, der wie durch den Doppelpfeil P dargestellt ist, axial, also in Fahrzeuglängsrichtung verschoben werden kann. Je nach Sitzlage verändert sich die Position des nicht gezeigten Fahrers relativ zu einer Anzeigeeinrichtung 3 respektive einer Projektionsfläche 4 der Anzeigeeinrichtung 3. Die Größe der Projektionsfläche 4 ist, wie in Fig. 1 gestrichelt dargestellt, veränderbar, so dass eine mittels eines Projektors 5, der die Informationsdarstellung von der Rückseite her auf die Projektionsfläche 4 projiziert, abgebildete, an der Vorderseite der Projektionsfläche 4 sichtbare Informationsdarstellung in ihrer Größe verändert werden kann.

Fig. 2 zeigt eine erste Ausführungsform der Anzeigeeinrichtung 3. Gezeigt ist die Projektionsfläche 4, die hier in Form einer flexiblen Leinwand 6 vorgesehen ist. Die Leinwand 6 ist auf zwei Rollen 7 teilweise aufgewickelt, wobei diese Rollen, wie durch die jeweiligen Doppelpfeile P1 und P2 dargestellt, einerseits linear beweglich sind, andererseits aber auch drehbeweglich sind. Für die Bewegung kann jeweils ein motorischer Antrieb vorgesehen sein, wobei die beiden Rollen 7 aber auch sowohl hinsichtlich der Linearbewegung als auch hinsichtlich der Drehbewegung miteinander gekoppelt sein können, so dass nur ein gemeinsamer Motor erforderlich ist.

In der in Fig. 2 gezeigten Stellung befinden sich die Rollen 7 quasi hinter entsprechenden Verkleidungsteilen 8, beispielsweise im Bereich der Mittelkonsole oder des Armaturenbretts. Die vom Projektor 5 auf die Rückseite der Leinwand 6 respektive der Projektionsfläche 4 projizierte Informationsdarstellung, also die Projektion 10, weist eine entsprechend kleine Bildgröße B1 auf, wie in Fig. 2 gezeigt ist. Denn aufgrund des eingefahrenen Rollensystems ist die Leinwand 6 noch auf beiden Rollen 7 teilweise aufgewickelt.

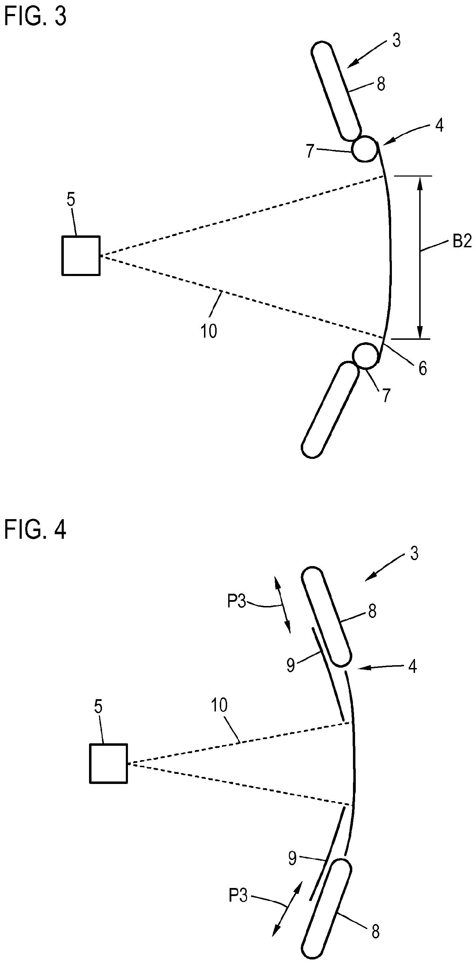

Fig. 3 zeigt die Anzeigeeinrichtung 3 aus Fig. 2, wobei das Rollensystem axial ausgefahren ist, mithin also die Projektionsfläche 4 axial weiter vom Projektor 5 beabstandet ist als in der in Fig. 2 gezeigten Stellung. Hierzu wurden die beiden Rollen 7 linear entsprechend der Pfeile P1 bewegt und gleichzeitig entsprechend der Pfeile P2 gedreht, so dass die Leinwand 6 von ihnen abgewickelt wird. Aufgrund der Linearbewegung werden die beiden Rollen 7 aus den Verkleidungsteilen 8 etwas herausgeschoben, ebenso die Leinwand 6. Ersichtlich ändert sich die Größe der Bilddarstellung, wie in Fig. 3 mit B2 angegeben. Das heißt, dass folglich aufgrund der Vergrößerung der Projektionsfläche gleichzeigt auch die Bilddarstellungsfläche respektive die Bildgröße des projizierten Bildes vergrößert wird.

Die in Fig. 2 gezeigte Anordnung wird eingestellt, wenn der Fahrersitz 2 nahe zur Anzeigeeinrichtung 3 ist, beispielsweise dann, wenn der Fahrer aktiv selbst fährt. Die in Fig. 3 gezeigte Anordnung wird eingestellt, wenn der Fahrer bei teil- oder vollautonomer Fahrt den Fahrersitz 2 in eine Ruheposition gebracht hat, in der er deutlich weiter von der Anzeigeeinrichtung 3 beabstandet ist. Durch die vergrößerte Bilddarstellung ist es ihm auch in dieser Position möglich, die aufprojizierten Informationen gut wahrnehmen zu können.

Dabei ist es denkbar, die Verstellung von der kleinen auf die große Bilddarstellung respektive die Projektionsflächenveränderung an die üblicherweise automatisch vorgenommene Verstellung des Fahrersitzes 2 zu koppeln. Wird dieser also bei teil- oder vollautonomer Fahrt vom Fahrer, beispielsweise durch Betätigen eines entsprechenden Bedienknopfes oder ähnliches, in die zurückgefahrene Ruheposition bewegt, so erfolgt automatisch auch ein Umschalten der Projektionsflächengröße und umgekehrt.

Fig. 4 zeigt eine zweite Ausgestaltung einer erfindungsgemäßen Anzeigevorrichtung 3, die eine Möglichkeit zur Vergrößerung der Projektionsfläche darstellt. Gezeigt ist wiederum die Projektionsfläche 4, die hier jedoch fest innerhalb der Verkleidungsteile 8 verbaut sind. Der Projektionsfläche 4 sind hier oberhalb und unterhalb angeordnete Verkleidungselemente 9 zugeordnet, die, wie durch die Doppelpfeile P3 gezeigt, nach oben und unten bewegbar sind. Die Verkleidungselemente 9 sind bei der Anordnung gemäß Fig. 3 so positioniert, dass sie die Projektionsfläche 4 oberseitig und unterseitig verdecken. Die Fläche, auf die der Projektor 5 seine Informationsdarstellung projizieren kann, also die Projektionsfläche 4, ist klein, resultierend aus der teilweisen Überdeckung. Diese Anordnung der Verkleidungselemente 9, beispielsweise plattenartige oder jalousieartige Verkleidungselemente, wird eingestellt, wenn der Fahrersitz benachbart zur Anzeigeeinrichtung 3 ist.

Wird der Fahrersitz in die Ruheposition bewegt, so werden über einen entsprechenden Motor die beiden Verkleidungselemente 9 verschoben und weiter auseinander gefahren, so dass die Überdeckung der Projektionsfläche 4 abnimmt. Auch hier sind bevorzugt die beiden Verkleidungselemente 9 bewegungsgekoppelt, so dass sie mit einem gemeinsamen Motor bewegt werden können.

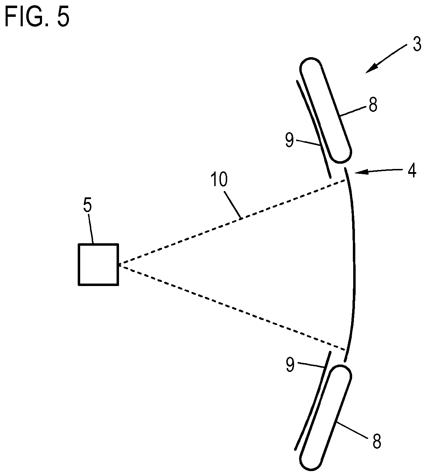

Mit dem Vergrößern der Projektionsfläche 4 einhergeht ein Umschalten des Projektors 5 dahingehend, dass er die Projektion der Bilddarstellung vergrößert, wie Fig. 5 im Vergleich mit Fig. 4 zeigt. Die jeweilige Projektion 10, ebenso wie in den Fig. 2 und 3, ist gestrichelt dargestellt. Ersichtlich ist demzufolge das an der Vorderseite der Projektionsfläche 4 sichtbare Bild deutlich größer, da die Projektionsfläche 4 vergrößert wurde. Wird der Sitz wieder zurückbewegt, so fahren die Verkleidungselemente 9 wieder zusammen, ähnlich wie beim Ausführungsbeispiel gemäß der Fig. 2 und 3 die Rollen 7 wieder in die Verkleidung einfahren.

## Patentansprüche

1. Kraftfahrzeug, umfassend wenigstens eine Anzeigeeinrichtung (3), wobei die Anzeigeeinrichtung (3) einen Projektor (5) und eine transluzente oder transparente Projektionsfläche (4), auf deren Rückseite der Projektor (3) die von der Vorderseite her erkennbare Informationsdarstellung projiziert, umfasst, wobei die Größe der Projektionsfläche (4) veränderbar ist,
**dadurch gekennzeichnet,**
**dass**
- der Abstand der Projektionsfläche (4) zum Projektor (3) veränderbar und die Projektionsfläche (4) flexibel und teilweise auf einer oder zwei Rollen (7) oder Walzen auf- und abwickelbar ist oder
- die Projektionsfläche (4) positionsfest verbaut ist und ein oder mehrere sie rückseitig abschnittsweise überdeckende Verkleidungselemente (9) vorgesehen sind, die zum Verändern des Überdeckungsgrads bewegbar sind.

2. Kraftfahrzeug nach Anspruch 1, wobei der Abstand der Projektionsfläche (4) zum Projektor (3) veränderbar und die Projektionsfläche (4) flexibel und teilweise auf einer oder zwei Rollen (7) oder Walzen auf- und abwickelbar ist,
**dadurch gekennzeichnet,**
**dass** die Projektionsfläche (4) in einer ersten, teilweise aufgewickelten Stellung innerhalb einer gehäusartigen Einfassung (8) und in einer zweiten, weiter oder vollständig abgewickelten Stellung aus der Einfassung (8) heraus bewegt ist.

3. Kraftfahrzeug nach Anspruch 1, wobei der Abstand der Projektionsfläche (4) zum Projektor (3) veränderbar und die Projektionsfläche (4) flexibel und teilweise auf einer oder zwei Rollen (7) oder Walzen auf- und abwickelbar ist, oder nach Anspruch 2,
**dadurch gekennzeichnet,**
**dass** die eine oder beide Rollen (7) oder Walzen mittels eines motorischen Antriebs bewegbar ist oder sind.

4. Kraftfahrzeug nach Anspruch 1, wobei die Projektionsfläche (4) positionsfest verbaut ist und ein oder mehrere sie rückseitig abschnittsweise überdeckende Verkleidungselemente (9) vorgesehen sind, die zum Verändern des Überdeckungsgrads bewegbar sind,
**dadurch gekennzeichnet,**
**dass** das oder die Verkleidungselemente (9) platten- oder jalousieartig ausgeführt und mittels eines motorischen Antriebs bewegbar sind.

5. Kraftfahrzeug nach Anspruch 4,
**dadurch gekennzeichnet,**
**dass** in Abhängigkeit der Veränderung der Größe der Projektionsfläche (4) auch die Größe der vom Projektor (5) projizierten Informationsdarstellung (10) veränderbar ist.

## Claims

1. Motor vehicle, comprising at least one display device (3), wherein the display device (3) comprises a projector (5) and a translucent or transparent projection area (4), onto the rear side of which the projector (3) projects the information display which can be seen from the front side, wherein the size of the projection area (4) is variable,
**characterised in that**
that
- the distance of the projection area (4) to the projector (3) is variable and the projection area (4) is flexible and can be partially wound and unwound on one or two rollers (7) or rolls, or
- the projection area (4) is installed in a fixed position and one or more covering elements (9) are provided which cover it in sections on the rear side and can be moved to change the degree of coverage.

2. Motor vehicle according to claim 1, wherein the distance of the projection area (4) to the projector (3) is variable and the projection area (4) is flexible and can be partially wound and unwound on one or two rollers (7) or rolls,
**characterised in that**
the projection area (4) is moved in a first, partially wound position within a housing-like enclosure (8) and in a second, further or completely unwound position out of the enclosure (8).

3. Motor vehicle according to claim 1, wherein the distance of the projection area (4) to the projector (3) is variable and the projection area (4) is flexible and can be partially wound and unwound on one or two rollers (7) or rolls, or according to claim 2,
**characterised in that**
the one or both rollers (7) or rolls are movable by means of a motor drive.

4. Motor vehicle according to claim 1, wherein the projection area (4) is installed in a fixed position and one or more covering elements (9) are provided which partially cover it on the rear side and which can be moved to change the degree of coverage,
**characterised in that**
the covering element(s) (9) is/are configured in the form of a plate or louvre and can be moved by means of a motorised drive.

5. Motor vehicle according to claim 4,
**characterised in that**
the size of the information display (10) projected by the projector (5) can also be changed as a function of the change in size of the projection area (4).

## Revendications

1. Véhicule automobile comprenant au moins un dispositif d'affichage (3), dans lequel le dispositif d'affichage (3) comporte un projecteur (5) et une surface de projection (4) translucide ou transparente, sur le côté arrière de laquelle le projecteur (3) projette la représentation d'information perceptible depuis le côté avant, dans lequel la grandeur de la surface de projection (4) est modifiable,
**caractérisé en ce**
**que**
- la distance de la surface de projection (4) au projecteur (3) est modifiable et la surface de projection (4) est enroulable et déroulable de manière flexible et partielle sur un ou deux rouleaux (7) ou cylindres ou
- la surface de projection (4) est montée de manière fixe en position et un ou plusieurs éléments de revêtement (9) la recouvrant côté arrière par sections sont prévus, lesquels sont mobiles pour la modification du degré de couverture.

2. Véhicule automobile selon la revendication 1, dans lequel la distance de la surface de projection (4) au projecteur (3) est modifiable et la surface de projection (4) est enroulable et déroulable de manière flexible et partielle sur un ou deux rouleaux (7) ou cylindres,
**caractérisé en ce**
**que** la surface de projection (4) est déplacée dans une première position enroulée partiellement dans une bordure de type boîtier (8) et dans une seconde position davantage déroulée ou complètement hors de la bordure (8).

3. Véhicule automobile selon la revendication 1, dans lequel la distance de la surface de projection (4) au projecteur (3) est modifiable et la surface de projection (4) est enroulable et déroulable de manière flexible et partielle sur un ou deux rouleaux (7) ou cylindres, ou selon la revendication 2,
**caractérisé en ce**
**que** les un ou deux rouleaux (7) ou cylindres est ou sont mobile(s) au moyen d'un entraînement motorisé.

4. Véhicule automobile selon la revendication 1, dans lequel la surface de projection (4) est montée de manière fixe en position et un ou plusieurs éléments de revêtement (9) la recouvrant côté arrière par sections sont prévus, lesquels sont mobiles pour la modification du degré de couverture,
**caractérisé en ce**
**que** le ou les éléments de revêtement (9) sont réalisés comme des plaques ou stores et sont mobiles au moyen d'un entraînement motorisé.

5. Véhicule automobile selon la revendication 4,
**caractérisé en ce**
**qu'**en fonction de la modification de la grandeur de la surface de projection (4), la grandeur de la représentation d'information (10) projetée par le projecteur (5) peut aussi être modifiée.
